# EUROPÄISCHE PATENTANMELDUNG

(11) **EP 4 321 761 A1**
(43) Veröffentlichungstag der Anmeldung: **14.02.2024**
(21) Anmeldenummer: 23189933.7
(22) Anmeldetag: 07.08.2023
(51) Int. Cl.: F15B 15/28, G01D 5/18

(54) **ERFASSUNGSEINRICHTUNG, ZYLINDERROHREINHEIT UND VERFAHREN ZUM ERFASSEN EINER POSITION EINES KOLBENS IN EINEM ZYLINDERROHR**

(30) Priorität: 11.08.2022 DE 102022208372
(71) Anmelder: Robert Bosch GmbH, 70442 Stuttgart (DE)
(72) Erfinder: Schwacke, Johannes, 63619 Bad Orb (DE); Englert, Nicolas, 97816 Lohr (DE)

(57) **Zusammenfassung**

Die Erfindung betrifft eine Erfassungseinrichtung (300) zur Erfassung einer Position eines Kolbens (305) in einem Zylinderrohr (100) und/oder zur Erfassung einer Belastung des Zylinderrohrs (100). Dabei weist das Zylinderrohr (100) einen Dehnmessstreifen (105) auf. Die Erfassungseinrichtung (300) weist eine Einleseschnittstelle (310) zum Einlesen eines Dehnmessstreifensignals (355) des Dehnmessstreifen (105) und eine Auswerteeinheit (315) zum Auswerten einer Position des Kolbens (305) und/oder der Belastung des Zylinderrohrs (100) unter Verwendung des Dehnmessstreifensignals (355) auf.

## Beschreibung

Die vorliegende Erfindung bezieht sich auf eine Erfassungseinrichtung, eine Zylinderrohreinheit und auf ein Verfahren zum Erfassen einer Position eines Kolbens in einem Zylinderrohr.

Beim Betrieb von Hydraulikzylindern ist es häufig erforderlich die Position des Kolbens zu erfassen und zur Steuerung und/oder Regelung des übergeordneten Systems zurückzuführen. Diese Positionserfassung kann absolut, relativ oder auch nur als eine Erkennung der Endlagen/Schaltpunkte ausgeprägt sein. In den meisten Anwendungsfällen wird die absolute Positionserfassung bevorzugt.

Es ist die Aufgabe der vorliegenden Erfindung vor diesem Hintergrund eine verbesserte Erfassungseinrichtung, eine verbesserte Zylinderrohreinheit und ein verbessertes Verfahren zum Erfassen einer Position eines Kolbens in einem Zylinderrohr zu schaffen.

Diese Aufgabe wird durch eine Erfassungseinrichtung, eine Zylinderrohreinheit und ein Verfahren zum Erfassen einer Position eines Kolbens in einem Zylinderrohr gemäß den Hauptansprüchen gelöst.

Dem vorgestellten Ansatz liegt die Erkenntnis zu Grunde, dass eine Erfassungseinrichtung geschaffen wird, die eine einfache und zuverlässige Positionserfassung und/oder Belastungserfassung eines Kolbens in einem Zylinderrohr ermöglichen kann.

Der hier vorgestellte Ansatz schafft eine Erfassungseinrichtung zur Erfassung einer Position eines Kolbens in einem Zylinderrohr und/oder zur Erfassung einer Belastung des Zylinderrohrs. Dabei weist das Zylinderrohr einen Dehnmessstreifen auf. Die Erfassungseinrichtung weist eine Einleseschnittstelle zum Einlesen eines Dehnmessstreifensignals des Dehnmessstreifen und eine Auswerteeinheit zum Auswerten einer Position des Kolbens und/oder der Belastung des Zylinderrohrs unter Verwendung des Dehnmessstreifensignals auf.

Der Dehnmessstreifen kann zum Erfassen von dehnenden und stauchenden Verformungen dienen. Der Dehnmessstreifen kann beispielsweise auf das Zylinderrohr aufgeklebt sein und sich bei einer Belastung des Zylinderrohrs verformen. Der hier vorgestellte Ansatz kann auch als eine Feststellung der Kolbenposition bei Hydraulikzylindern durch Erfassung und Auswertung der Dehnungsunterschiede am Außendurchmesser des Zylinderrohrs verstanden werden.

Das Zylinderrohr kann zumindest einen zweiten Dehnmessstreifen aufweisen, der an einer anderen Position als der Dehnmessstreifen angeordnet ist. Dabei kann die Einleseschnittstelle zum Einlesen zumindest eines zweiten Dehnmessstreifensignals vom zweiten Dehnmessstreifen ausgebildet sein. Die Auswerteeinheit kann zum Auswerten einer Position des Kolbens und/oder der Belastung des Zylinderrohrs ferner unter Verwendung des zweiten Dehnmessstreifensignals ausgebildet sein. Vorteilhafterweise kann unter Verwendung eines zweiten Dehnmessstreifens eine zuverlässige, schnellere und genauere Position des Kolbens und/oder Belastung des Zylinderrohrs ermöglicht werden. Ein zweiter Dehnmessstreifen kann kostengünstig hergestellt und am Zylinderrohr verbaut werden.

Die Einleseschnittstelle kann ausgebildet sein, um das erste und zweite Dehnmessstreifensignal von dem Dehnmessstreifen und dem zweiten Dehnmessstreifen einzulesen, die in eine gleiche Messrichtung ausgerichtet sein können. Somit kann schnell und einfach die Position des Kolbens erfasst werden.

Das Zylinderrohr kann zumindest einen dritten Dehnmessstreifen aufweisen, der an einer anderen Position als der Dehnmessstreifen und der zweite Dehnmessstreifen angeordnet ist. Dabei kann die Einleseschnittstelle zum Einlesen zumindest eines dritten Dehnmessstreifensignals vom dritten Dehnmessstreifen ausgebildet sein. Die Auswerteeinheit kann zum Auswerten einer Position des Kolbens und/oder der Belastung des Zylinderrohrs ferner unter Verwendung des dritten Dehnmessstreifensignals ausgebildet sein. Vorteilhafterweise kann unter Verwendung eines dritten Dehnmessstreifens eine zuverlässige, schnellere und genauere Position des Kolbens und/oder Belastung des Zylinderrohrs ermöglicht werden. Ein dritter Dehnmessstreifen kann kostengünstig hergestellt und verbaut werden. Durch die Verwendung von mehreren Dehnmessstreifen können Messfehler verhindert oder zumindest reduziert werden.

Die Auswerteeinheit kann ausgebildet sein, um eine Position des Kolbens zwischen dem Dehnmessstreifen und dem zweiten Dehnmessstreifen zu ermitteln, wenn der Dehnmessstreifen eine durch das Dehnmessstreifensignal repräsentierte Dehnung aufweist, die sich von einer zweiten Dehnung des durch das zweite Dehnmessstreifensignal repräsentierte zweiten Dehnmessstreifens unterscheidet. Vorteilhafterweise kann hierdurch mittels einer einfachen Auswertungsvorgehensweise schnell und zuverlässig die Position des Kolbens ermittelt werden.

Die Auswerteeinheit kann ausgebildet sein, um unter Verwendung des zumindest einen Dehnmessstreifensignals zur Ermittlung der Belastung des Zylinderrohrs einen Umfang und zusätzlich oder alternativ einen Querschnitt des Zylinderrohrs auszuwerten. Vorteilhafterweise auf diese Art schnell und mit technisch einfachen Mitteln eine Belastung des Zylinderrohres ermittelt werden, da diese Belastung des Zylinderrohres im Wesentlichen durch eine Verformung der Wand des Zylinderrohres bedingt ist.

Eine Zylinderrohreinheit mit einem einen Dehnmessstreifen aufweisenden Zylinderohr weist eine Ausführungsform einer hierin genannten Erfassungseinrichtung auf. Auch durch eine solche Ausführungsform können die Vorteile des hier beschriebenen Ansatzes sehr effizient realisiert werden.

Der zumindest eine Dehnmessstreifen kann an einer Außenwand des Zylinderrohrs angeordnet sein zusätzlich oder alternativ kann der zumindest eine Dehnmessstreifen eine Ausdehnung einer Außenwand des Zylinderrohrs abbilden. Der Dehnmessstreifen kann beispielsweise auf die Außenwand aufgeklebt sein. Auf diese Weise kann der oder die Dehnmessstreifen zuverlässig auf der Außenwand des Zylinderrohres befestigt werden.

Das Zylinderrohr kann einen ersten Dehnmessstreifen an einer ersten Position und zumindest einen zweiten Dehnmessstreifen an einer von der ersten Position unterschiedlichen zweiten Position aufweisen. Somit kann eine zuverlässige Positionserfassung des Kolbens ermöglicht werden.

Die Dehnmessstreifen können parallel zueinander angeordnet sein. Sie können die gleichen Abmessungen aufweisen.

Ein Verfahren zum Erfassen einer Position eines Kolbens in einem Zylinderrohr und zusätzlich oder alternativ zum Erfassen einer Belastung des Zylinderrohrs, wobei das Zylinderrohr einen Dehnmessstreifen aufweist, umfasst die folgenden Schritte:
Einlesen eines Dehnmessstreifensignals des Dehnmessstreifen; und
Auswerten einer Position des Kolbens und/oder der Belastung des Zylinderrohrs unter Verwendung des Dehnmessstreifensignals. Auch durch eine solche Ausführungsform können die Vorteile des hier beschriebenen Ansatzes sehr effizient realisiert werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Die Erfindung wird nachstehend anhand der beigefügten Zeichnungen beispielhaft näher erläutert. Es zeigen:
- Fig. 1: eine Darstellung eines Zylinderrohrs für ein Ausführungsbeispiel einer Zylinderrohreinheit;
- Fig. 2: eine Darstellung eines Zylinderrohrs für ein Ausführungsbeispiel einer Zylinderrohreinheit;
- Fig. 3: eine Teildarstellung eines Ausführungsbeispiels einer Erfassungseinrichtung; und
- Fig. 4: eine Ablaufdiagramm eines Ausführungsbeispiels eines Verfahrens zum Erfassen einer Position eines Kolbens in einem Zylinderrohr und/oder zum Erfassen einer Belastung des Zylinderrohrs.

Gleiche oder ähnliche Elemente können in den nachfolgenden Figuren durch gleiche oder ähnliche Bezugszeichen versehen sein. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

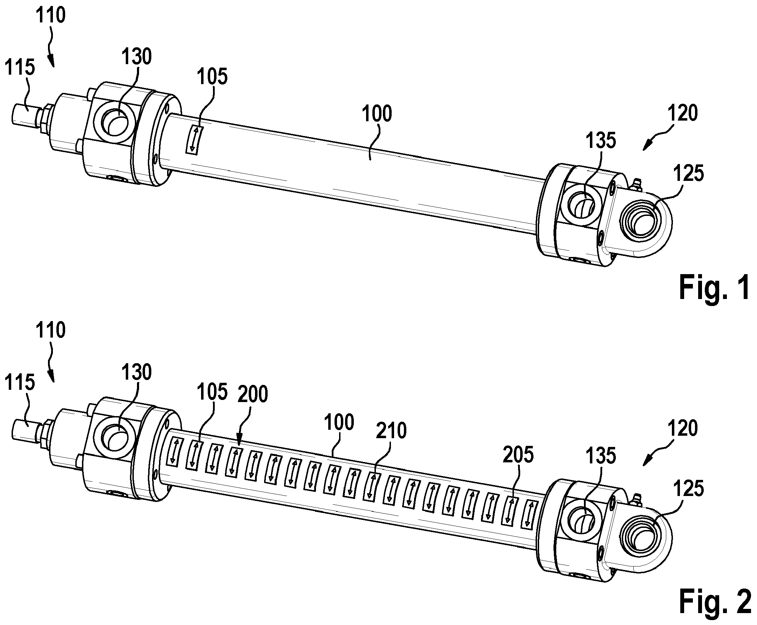

Fig. 1 zeigt eine Darstellung eines Zylinderrohrs 100 für ein Ausführungsbeispiel einer Zylinderrohreinheit.

Das Zylinderrohr 100 weist an einem ersten Ende 110 beispielsweise ein erstes Befestigungselement 115 zum Befestigen des Zylinderrohres 100 an einem Kolben auf. An einem zweiten Ende 120 des Zylinderrohres 100 ist ebenfalls beispielhaft ein zweites Befestigungselement 125 zum Befestigen des Zylinderrohres 100 an einem Kolben angeordnet. Dabei ist das zweite Befestigungselement 125 beispielsweise als eine Durchgangsöffnung ausgeformt, zum Beispiel um eine Schraube oder eine Steckverbindung hindurchführen zu können.

Das Zylinderrohr 100 weist gemäß einem Ausführungsbeispiel an seinem ersten Ende 110 einen ersten Hydraulikanschluss 130 und an seinem zweiten Ende 120 einen zweiten Hydraulikanschluss 135 auf. Die Hydraulikanschlüsse 130, 135 sind beispielsweise gleichartig ausgeformt und parallel zueinander angeordnet und können zur Einleitung und/oder Ausleitung eines Hydraulikfluids in das Zylinderrohr 100 verwendet werden.

Das Zylinderrohr 100 weist einen Dehnmessstreifen 105 auf, der beispielsweise an einer Außenwand des Zylinderrohrs 100 angeordnet ist. Gemäß dem hier gezeigten Ausführungsbeispiel ist der Dehnmessstreifen 105 in einem Bereich des ersten Endes 110 des Zylinderrohres 100 angeordnet. Der Dehnmessstreifen 105 ist beispielsweise rechteckig ausgeformt und auf das Zylinderrohr 100 aufgeklebt.

Bei einer Belastung des Zylinderrohrs 100 verformt sich beispielsweise der Dehnmessstreifen 105 und bildet somit eine Ausdehnung einer Außenwand des Zylinderrohres 100 ab. Gemäß einem Ausführungsbeispiel ist der Dehnmessstreifen 105 auf seiner Oberfläche in Richtung des dargestellten Doppelpfeils sensitiv, der beispielhaft die Richtungen anzeigt, in die eine Ausdehnung erfolgen und gemessen werden kann.

Figur 2 zeigt eine Darstellung eines Zylinderrohrs 100 für ein Ausführungsbeispiel einer Zylinderrohreinheit. Dabei ähnelt oder entspricht das Zylinderrohr 100 dem Zylinderrohr aus Fig. 1 mit Ausnahme dessen, dass das Zylinderrohr 100 eine Mehrzahl von Dehnmessstreifen 200 aufweist.

Gemäß dem hier dargestellten Ausführungsbeispiel weist das Zylinderrohr 100 eine Anzahl von 19 Dehnmesstreifen 200 auf. Alternativ kann das Zylinderrohr eine geringere oder ein höhere Anzahl der in Figur 2 dargestellten Dehnmesstreifen 200 aufweisen. Die Dehnmesstreifen 200 sind beispielsweise parallel zueinander angeordnet und sind beispielsweise gleichartig ausgeformt. Gemäß dem hier dargestellten Ausführungsbeispiel ist beispielsweise ein zweiter Dehnmessstreifen 205 an einer anderen Position als der Dehnmessstreifen 105 angeordnet.

Gemäß einem Ausführungsbeispiel ist auch noch ein dritter Dehnmessstreifen 210 an einer anderen Position als der Dehnmessstreifen 105 und der zweite Dehnmessstreifen 205 angeordnet. Beispielsweise ist der dritte Dehnmessstreifen 210 zwischen dem Dehnmessstreifen 105 und dem zweiten Dehnmessstreifen 205 angeordnet.

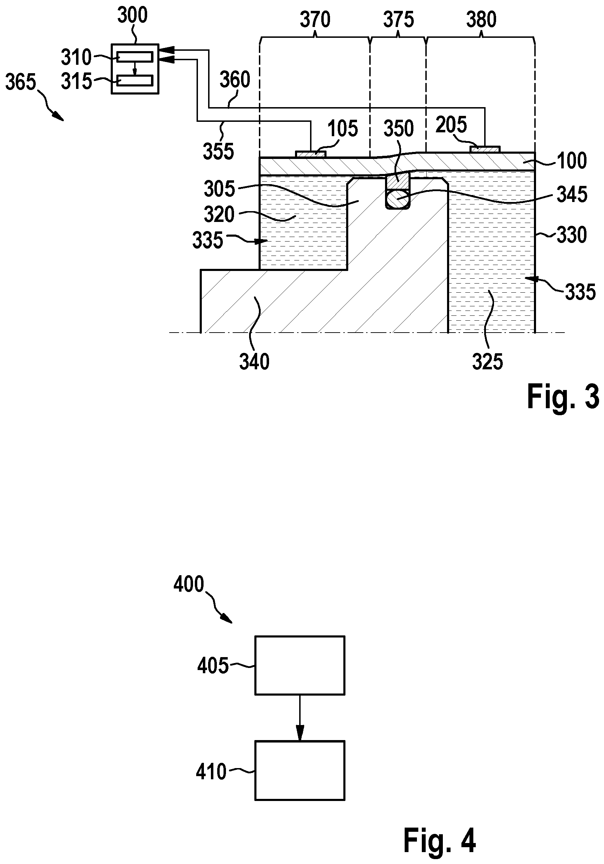

Figur 3 zeigt eine Teildarstellung eines Ausführungsbeispiels einer Erfassungseinrichtung 300 in der Querschnittansicht. Die Erfassungseinrichtung 300 ist beispielsweise an einem Zylinderrohr 100 angeordnet. Bei dem Zylinderrohr 100 kann es sich um das in den vorangegangenen Figuren beschriebene Zylinderrohr 100 handeln. Das Zylinderrohr 100 weist gemäß einem Ausführungsbeispiel den ersten Dehnmessstreifen 105 und zumindest den zweiten Dehnmessstreifen 205 auf. Die Dehnmessstreifen 105, 205 entsprechen oder ähneln den in den vorangegangenen Figuren beschriebenen Dehnmessstreifen.

Die Erfassungseinrichtung 300 ist ausgebildet, um eine Position eines Kolbens 305 in einem Zylinderrohr 100 zu erfassen. Zusätzlich oder alternativ ist die Erfassungseinrichtung 300 ausgebildet, um eine Belastung des Zylinderrohrs 100 zu erfassen. Die Erfassungseinrichtung 300 und das Zylinderrohr 100 bilden eine Zylinderrohreinheit 365.

Dazu weist die Zylinderrohreinheit 365beispielsweise den Kolben 305, der innerhalb eines Gehäuses 330 angeordnet ist und von einem Fluid 335 umgeben ist, auf. Der Kolben 305 ist an einer Kolbenstange 340 angeordnet, wobei der Kolben 305 und die Kolbenstange 340 beispielsweise einstückig ausgeformt sind. Der Kolben 305 weist beispielsweise einen Kolbenführungsring 345 und/oder eine Kolbendichtung 350 auf. Bei einer translatorischen Bewegung der Kolbenstange 340 bewegt sich der Kolben 305 translatorisch in dem Fluid 335 und bewirkt einen Druck 320, 325 auf das Fluid 335, wobei gemäß dem hier dargestellten Ausführungsbeispiel der Druck 320 kleiner ist als der Druck 325. Das Zylinderrohr 100 ist beispielsweise an dem Kolben 305 angeordnet, wobei die Kolbendichtung 350 zwischen dem Zylinderrohr 100 und dem Kolben 305 angeordnet ist. Der Kolben 305 überträgt die Drücke 320, 325 auf das Fluid 335, wodurch eine radiale Belastung bzw. Kraft auf das Zylinderrohr 100 ausgeübt wird. Die Dehnmessstreifen 105, 205 auf dem Zylinderrohr 100 erfassen diese Belastung, die sich in einer Ausdehnung der Zylinderwand manifestiert, und geben Dehnmessstreifensignale 355, 360 an die Erfassungseinrichtung 300 aus.

Zum Auswerten der Dehnmessstreifensignale 355, 360 weist die Erfassungseinrichtung 300 eine Einleseschnittstelle 310 und eine Auswerteeinheit 315 auf. Der erste Dehnmessstreifen 105 gibt das erste Dehnmessstreifensignal 355 an die Einleseschnittstelle 310 aus und der zweite Dehnmessstreifen 205 gibt das zweite Dehnmessstreifensignal 360 an die Einleseschnittstelle 310 aus. Die Einleseschnittstelle 310 ist ausgebildet, um die Dehnmessstreifensignal 355, 360 einzulesen. Alternativ ist die Einleseschnittstelle 310 ausgebildet, um lediglich eines der Dehnmessstreifensignale 355, 360 einzulesen oder um zusätzlich zu den Dehnmessstreifensignalen 366, 360 ein drittes Dehnmessstreifensignal einzulesen.

Die Auswerteeinheit 315 ist ausgebildet, um unter Verwendung der Dehnmessstreifensignale 355, 360 die Position des Kolbens 305 und/oder die Belastung des Zylinderrohrs 100 auszuwerten. Alternativ ist die Auswerteeinheit 315 ausgebildet, um unter Verwendung von lediglich einem der Dehnmessstreifensignale 355, 360 die Position des Kolbens 305 und/oder die Belastung des Zylinderrohrs 100 auszuwerten oder um die Position des Kolbens 305 und/oder die Belastung des Zylinderrohrs 100 unter Verwendung eines zusätzlichen dritten Dehnmessstreifensignals auszuwerten.

Gemäß einem Ausführungsbeispiel ist die Auswerteeinheit 315 ausgebildet, um die Position des Kolbens 305 zwischen dem Dehnmessstreifen 105 und dem zweiten Dehnmessstreifen 205 zu ermitteln. Dies ist beispielsweise möglich, wenn der Dehnmessstreifen 205 eine durch das Dehnmessstreifensignal 355 repräsentierte Dehnung aufweist. Diese Dehnung unterscheidet sich dann beispielsweise von einer zweiten Dehnung, die der zweite Dehnmessstreifen 205 signalisiert und die durch das zweite Dehnmessstreifensignal 360 repräsentiert ist. Gemäß dem hier dargestellten Ausführungsbeispiel erfährt der zweite Dehnmessstreifen 205 eine größere Dehnung als der erste Dehnmessstreifen 105.

Gemäß einem Ausführungsbeispiel ist die Auswerteeinheit 315 ausgebildet, um unter Verwendung von zumindest einem der Dehnmessstreifensignale 355, 360 zur Ermittlung der Belastung des Zylinderrohrs 100 einen Umfang und/oder einen Querschnitt des Zylinderrohrs 100 auszuwerten.

Mit einem Dehnmessstreifen 105, 205 in Umfangsrichtung am Außendurchmesser des Zylinderrohrs 100 ist die Dehnung des Zylinderrohrs 100 durch Innendrücke erfassbar. Im Betrieb steht in der Regel eine Druckdifferenz über die Kolbendichtung 350 an. Wenn der Kolben 305 und somit die Kolbendichtung 350 unterhalb des Dehnmessstreifens 105, 205 hin und her bewegt wird, kann der Dehnungsunterschied und somit ein Durchfahren des Kolbens 105 erfasst werden. Mittels paralleler Platzierung von vielen Dehnmessstreifen 105, 205, siehe auch Figur 2, entlang des Zylinderrohrs 100 wird eine bessere Auflösung erreicht. Weiterhin wird nicht nur eine Durchfahrt unter dem Dehnmessstreifen 105, 205 erkannt, sondern auch eine genauere Position, da sich die Dehnung des Zylinderrohrs 100 nicht abrupt, sondern stetig ändert. Mit dieser Lösung zur Positionserkennung ist kein besonderes Design des Zylinders erforderlich. Stattdessen kann die Positionserfassung bei kompatiblen Zylindern nachgerüstet werden. Je nach Aufbau des Systems ist auch eine absolute Bestimmung der Innendrücke und somit eine Kraftbestimmung möglich.

Bei den meisten Hydraulikzylindern ist am Kolben 305 eine Kolbendichtung 305 verbaut. An dieser Kolbendichtung 305 steht im Betrieb im Regelfall eine Druckdifferenz an. Die Druckdifferenz entsteht durch externe Kräfte, die zur Bewegung des Kolbens 305 oder auch im Stillstand beim Lasthalten überwunden werden. Selbst wenn keine externe Kraft wirkt, ist bei einer Bewegung des Kolbens 305 die Reibung des Führungs- und Dichtungssystem zu überwinden und je nach Dimensionierung der Anschlussleitungen bildet sich durch die abströmende Hydraulikflüssigkeit ein Staudruck. Der im Zylinder wirkende hydraulischen Innendruck weitet das Zylinderrohr 100 auf. Aufgrund der beiden unterschiedlichen Druckniveaus bilden sich beispielsweise drei Zonen heraus: eine erster Zone 370 mit konstanter Dehnung auf niedrigem Druckniveau, eine dritte Zone 380 mit konstanter Dehnung auf hohem Druckniveau und eine zweite Zone 375 mit dem Übergangsbereich zwischen den beiden Zonen 370, 380. Die Kolbendichtung 350 befindet sich idealerweise mittig in der zweiten Zone 375. Zusätzlich zum Innendruck wird das Zylinderrohr 100 noch durch weitere Effekte wie Temperaturänderungen oder Längskräfte bzw. Querkräfte verformt. Ein außen am Zylinderrohr 100 platzierter Dehnmessstreifen 105, 205 misst den Gesamtdehnungszustand des Zylinderrohrs 100 an dieser Stelle. Mithilfe von weiteren Sensordaten und/oder spezieller Software können die Störgrößen so weit kompensiert werden, dass eine qualitative oder quantitative Auswertung des Dehnungszustands möglich ist.

Bei der qualitativen Auswertung wird nur der relative Dehnungsunterschied und dadurch die Kolbenposition berechnet, bei der quantitativen Auswertung kann zusätzlich auch der hydraulische Druck und damit die Zylinderkraft bestimmt werden. Welche der beiden Auswertungsprinzipien umgesetzt werden kann, hängt stark von den Rand- und Umgebungsbedingungen der Anwendung ab.

Je mehr Dehnmessstreifen platziert werden, desto besser wird die Auflösung des Systems und umso genauer ist die Kolbenposition bestimmbar. Wird nur ein einziger Dehnmessstreifen eingesetzt, kann dieser nur als Schalter, vergleichbar mit einem induktiven Endschalter, funktionieren. Der Kern des hier vorgestellten Ansatzes ist die Positionserfassung bei Hydraulikzylindern durch außenliegende Dehnmessstreifen.

Figur 4 zeigt ein Ablaufdiagramm eines Ausführungsbeispiels eines Verfahrens 400 zum Erfassen einer Position eines Kolbens in einem Zylinderrohr und zusätzlich oder alternativ zum Erfassen einer Belastung des Zylinderrohrs. Das Zylinderrohr weist dabei einen Dehnmessstreifen auf. Das Verfahren 400 umfasst einen Schritt 405 des Einlesens eines Dehnmessstreifensignals des Dehnmessstreifen. Ferner umfasst das Verfahren 400 einen Schritt 410 des Auswertens einer Position des Kolbens und/oder der Belastung des Zylinderrohrs unter Verwendung des Dehnmessstreifensignals.

Die gezeigten Ausführungsbeispiele sind nur beispielhaft gewählt und können miteinander kombiniert werden.

### Bezugszeichenliste

- 100: Zylinderrohr
- 105: Dehnmesstreifen
- 110: erstes Ende
- 115: erstes Befestigungselement
- 120: zweites Ende
- 125: zweites Befestigungselement
- 130: erster Hydraulikanschluss
- 135: zweiter Hydraulikanschluss

- 200: Mehrzahl von Dehnmesstreifen
- 205: zweiter Dehnmessstreifen
- 210: dritter Dehnmessstreifen

- 300: Erfassungseinrichtung
- 305: Kolbe
- 310: Einleseschnittstelle
- 315: Auswerteeinheit
- 320: Druck
- 325: Druck
- 330: Gehäuse
- 335: Fluid
- 340: Kolbenstange
- 345: Kolbenführungsring
- 350: Kolbendichtung
- 355: erstes Dehnmessstreifensignal
- 360: zweites Dehnmessstreifensignal
- 365: Zylinderrohreinheit
- 370: erste Zone
- 375: zweite Zone
- 380: dritte Zone
- 400: Verfahren zum Erfassen einer Position eines Kolbens in einem Zylinderrohr und/oder zum Erfassen einer Belastung des Zylinderrohrs
- 405: Schritt des Einlesens
- 410: Schritt des Auswertens

## Patentansprüche

1. Erfassungseinrichtung (300) zur Erfassung einer Position eines Kolbens (305) in einem Zylinderrohr (100) und/oder zur Erfassung einer Belastung des Zylinderrohrs (100), wobei das Zylinderrohr (100) einen Dehnmessstreifen aufweist, wobei die Erfassungseinrichtung (300) die folgenden Merkmale aufweist:
eine Einleseschnittstelle (310) zum Einlesen eines Dehnmessstreifensignals (355) des Dehnmessstreifen (105); und
eine Auswerteeinheit (315) zum Auswerten einer Position des Kolbens (305) und/oder der Belastung des Zylinderrohrs (100) unter Verwendung des Dehnmessstreifensignals (355).

2. Erfassungseinrichtung (300) gemäß Anspruch 1, wobei das Zylinderrohr (100) zumindest einen zweiten Dehnmessstreifen (205) aufweist, der an einer anderen Position als der Dehnmessstreifen (105) angeordnet ist, wobei die Einleseschnittstelle (310) zum Einlesen zumindest eines zweiten Dehnmessstreifensignals vom zweiten Dehnmessstreifen ausgebildet ist und die Auswerteeinheit (315) zum Auswerten einer Position des Kolbens (305) und/oder der Belastung des Zylinderrohrs (100) ferner unter Verwendung des zweiten Dehnmessstreifensignals (360) ausgebildet ist.

3. Erfassungseinrichtung (300) gemäß Anspruch 2, wobei die Einleseschnittstelle (310) ausgebildet ist, um das erste und zweite Dehnmessstreifensignal (355, 360) von dem Dehnmessstreifen (105) und dem zweiten Dehnmessstreifen (205) einzulesen, die in eine gleiche Messrichtung ausgerichtet sind.

4. Erfassungseinrichtung (300) gemäß Anspruch 2 oder 3, wobei das Zylinderrohr (100) zumindest einen dritten Dehnmessstreifen (210) aufweist, der an einer anderen Position als der Dehnmessstreifen (105) und der zweite Dehnmessstreifen (205) angeordnet ist, wobei die Einleseschnittstelle (310) zum Einlesen zumindest eines dritten Dehnmessstreifensignals vom dritten Dehnmessstreifen (210) ausgebildet ist, und die Auswerteeinheit (315) zum Auswerten einer Position des Kolbens (305) und/oder der Belastung des Zylinderrohrs (100) ferner unter Verwendung des dritten Dehnmessstreifensignals ausgebildet ist.

5. Erfassungseinrichtung (300) gemäß einem der Ansprüche 2 bis 4, wobei die Auswerteeinheit (315) ausgebildet ist, um eine Position des Kolbens (305) zwischen dem Dehnmessstreifen (105) und zumindest dem zweiten Dehnmessstreifen (205) zu ermitteln, wenn der Dehnmessstreifen (105) eine durch das Dehnmessstreifensignal (355) repräsentierte Dehnung aufweist, die sich von einer zweiten Dehnung des durch das zweite Dehnmessstreifensignal (360) repräsentierte zweiten Dehnmessstreifens (205) unterscheidet.

6. Erfassungseinrichtung (300) gemäß einem der vorangegangenen Ansprüche, wobei die Auswerteeinheit (315) ausgebildet ist, um unter Verwendung des zumindest einen Dehnmessstreifensignals (355) zur Ermittlung der Belastung des Zylinderrohrs (100) einen Umfang und/oder einen Querschnitt des Zylinderrohrs (100) auszuwerten.

7. Zylinderrohreinheit (365) mit einem einen Dehnmessstreifen (105) aufweisenden Zylinderohr (100) und einer Erfassungseinrichtung (300) gemäß einem der vorangegangen Ansprüche.

8. Zylinderrohreinheit (365) gemäß einem der Anspruch 7, wobei zumindest der eine Dehnmessstreifen (105) an einer Außenwand des Zylinderrohrs (100) angeordnet ist und/oder wobei zumindest der eine Dehnmessstreifen (105) ausgebildet ist, um eine Ausdehnung einer Außenwand des Zylinderrohrs (100) zu erfassen und/oder abzubilden.

9. Zylinderrohreinheit (365) gemäß Anspruch 7 oder 8, wobei das Zylinderrohr (100) einen ersten Dehnmessstreifen (105) an einer ersten Position und zumindest einen zweiten Dehnmessstreifen (205) an einer von der ersten Position unterschiedlichen zweiten Position aufweist.

10. Zylinderrohreinheit (365) gemäß einem der Anspruch 9, wobei die Dehnmessstreifen (105, 205) parallel zueinander angeordnet sind.

11. Verfahren (400) zum Erfassen einer Position eines Kolbens (305) in einem Zylinderrohr (100) und/oder zum Erfassen einer Belastung des Zylinderrohrs (100), wobei das Zylinderrohr (100) einen Dehnmessstreifen (105) aufweist, wobei das Verfahren (400) die folgenden Schritte umfasst:
Einlesen (405) eines Dehnmessstreifensignals (355) des Dehnmessstreifen (105); und
Auswerten (410) einer Position des Kolbens (305) und/oder der Belastung des Zylinderrohrs (100) unter Verwendung des Dehnmessstreifensignals (355).

12. Computer-Programmprodukt mit Programmcode zur Durchführung des Verfahrens (400) nach Anspruch 11, wenn das Computer-Programmprodukt auf einer Vorrichtung ausgeführt wird.

13. Maschinenlesbares Speichermedium, auf dem das Computerprogramm nach Anspruch 12 gespeichert ist
